# EUROPÄISCHE PATENTSCHRIFT

(11) **EP 3 688 339 B1**
(45) Veröffentlichungstag und Bekanntmachung des Hinweises auf die Patenterteilung: **13.04.2022**
(21) Anmeldenummer: 18779618.0
(22) Anmeldetag: 25.09.2018
(51) Int. Cl.: F16H 1/28

(54) **GETRIEBEANORDNUNG FÜR EINE VERSTELLEINHEIT**
GEARING ASSEMBLY FOR AN ADJUSTING UNIT
ENSEMBLE TRANSMISSION CONÇU POUR UNE UNITÉ DE RÉGLAGE

(30) Priorität: 26.09.2017 DE 102017217050
(43) Veröffentlichungstag der Anmeldung: 05.08.2020
(73) Patentinhaber: KEIPER Seating Mechanisms Co., Ltd., Shanghai, 201315 (CN)
(72) Erfinder: HO, Van-Toan, 42653 Solingen (DE)
(74) Vertreter: Liedtke & Partner Patentanwälte
(86) Internationale Anmeldenummer: PCT/EP2018/075870
(87) Internationale Veröffentlichungsnummer: WO 2019/063510

(56) Entgegenhaltungen:
- EP-A1- 3 101 313
- DE-T2- 69 008 901
- US-A- 3 108 498

## Beschreibung

Die Erfindung betrifft eine Getriebeanordnung für eine Verstelleinheit eines Sitzes, insbesondere eine Höhenverstelleinheit einer Kopfstütze oder eine Lehnenverstelleinheit einer Sitzlehne eines Sitzes.

Im Stand der Technik sind Getriebeanordnungen für eine Verstelleinheit bekannt, welche als Taumel- oder Planetengetriebe ausgebildet sind. Diese verschleißen insbesondere am Exzenter oder Sonnenrad, so dass ein Abwälzen der Planetenräder nicht immer gewährleistet ist.

Zum Beispiel ist aus der DE 690 08 901 T2 eine Getriebeanordnung zum Verringern oder Erhöhen von Drehzahlen und insbesondere eine einen Planetenrad- oder-getriebemechanismus verwendende Getriebeanordnung bekannt.

Aufgabe der vorliegenden Erfindung ist es, eine verbesserte Getriebeanordnung für eine Verstelleinheit anzugeben, welche eine hohe Übersetzung ermöglicht bei geringem Verschleiß. Darüber hinaus ist es Aufgabe der Erfindung, einen Getriebemotor mit einer verbesserten Getriebeanordnung anzugeben.

Die Aufgabe wird erfindungsgemäß mit einer Getriebeanordnung mit den Merkmalen des Patentanspruchs 1 gelöst. Hinsichtlich des Getriebemotors wird die Erfindung durch die Merkmale des Patentanspruchs 8 gelöst.

Weiterbildungen der Erfindung sind Gegenstand der Unteransprüche.

Die mit der Erfindung erzielten Vorteile bestehen insbesondere darin, dass sich aufgrund der exzenterfreien Ausbildung der jeweiligen Umlaufgetriebeeinheit der Wirkungsgrad der Getriebeanordnung erhöht und der Verschleiß verringert. Insbesondere aufgrund dessen, dass der übliche Exzenter entfällt, ist der Verschleiß der Getriebeanordnung sicher verringert gegenüber üblichen Taumel- oder Planetengetriebe mit Exzenter. Darüber hinaus ermöglicht die Getriebeanordnung eine hohe Übersetzung aufgrund der Zahndifferenz (auch Zähneanzahldifferenz genannt) von beispielsweise eins der Hohlräder.

Erfindungsgemäß sind die Lagerräder drehbar geteilt und umfassen je Hohlrad ein Lagerteilrad. Die beiden Lagerteilräder je Lagerrad sind voneinander getrennt und wälzen unabhängig voneinander im jeweils zugehörigen Hohlrad ab. In einer Ausführung weisen die Lagerteilräder eines Lagerrades Verzahnungen auf, deren Zähneanzahl gleich ist.

In einer Ausführungsform ist antriebsseitig an einem der beiden Hohlräder ein Antriebsrad vorgesehen, das stirnseitig in Richtung der Hohlräder drei Bolzen zur Aufnahme je eines der Planetenräder aufweist. Am freien Ende der Bolzen, die die Planetenräder tragen, ist ein Halteelement angeordnet, das wiederum die Bolzen trägt und die Planetenräder auf dem Antriebsrad fixiert.

In einer weiteren Ausführungsform ist abtriebsseitig eine Halterung angeordnet, die eine Abtriebswelle trägt, die drehbar gelagert ist.

Beispielsweise ist die Abtriebswelle am Antriebsrad drehbar gelagert. Auf der zum Antrieb gegenüberliegenden Seite der Abtriebswelle und somit auf der Abtriebsseite ist an der Halterung ein Ritzel angeordnet. Dabei kann die Halterung mittels Stegen im abtriebsseitigen Hohlrad gehalten sein. Mittels des Ritzels ist abtriebsseitig eine Verstelleinheit, beispielsweise eine Höhenverstelleinheit einer Kopfstütze oder eine Lehnenverstelleinheit einer Sitzlehne, antreibbar, um eine Verstellung zu bewirken.

Die Aufgabe wird darüber hinaus durch einen Getriebemotor mit der zuvor beschriebenen Getriebeanordnung gelöst, wodurch eine motorische Verstellung ermöglicht ist. Dazu treibt ein Motor, insbesondere ein Elektromotor, über die Getriebeanordnung, beispielsweise die Umlaufgetriebeeinheit oder ein anderes Zahnradgetriebe in Planetenbauweise, die Abtriebswelle an. Dabei kämmen die Verzahnungen der Planetenräder in den Hohlrädern mit unterschiedlichen Verzahnungen, wodurch zumindest eine Getriebestufe mit unterschiedlichen Untersetzungen gebildet ist.

In einer möglichen Ausführungsform ist ein Motor senkrecht zur Getriebeanordnung, insbesondere 90° zur Längsachse der Getriebeanordnung angeordnet. Das Antriebsrad, insbesondere ein Schneckenrad, mit einer äußeren Schneckenverzahnung weist im Innenhohlraum einen Bolzenträger für die Bolzen der Planetenräder auf. Beispielsweise ist der Bolzenträger mit Bolzen durch Spritzgießen in das Antriebsrad eingebracht.

Die senkrechte Anordnung von Motor und Getriebeanordnung zueinander ermöglicht einen kleinen Bauraum. Da der Exzenter entfällt, weist der Getriebemotor einen besseren Wirkungsgrad auf. Da auch das Sonnenrad entfällt, ist der Verschleiß vermindert.

Ausführungsbeispiele der Erfindung werden anhand von Zeichnungen näher erläutert. Dabei zeigen:
- Figur 1: schematisch ein Ausführungsbeispiel für eine Getriebeanordnung mit einer Antriebseinheit und einer mit dieser gekoppelten Getriebeeinheit,
- Figur 2: schematisch in perspektivischer Darstellung die Getriebeanordnung mit geöffnetem Gehäuse,
- Figur 3: schematisch in perspektivischer Darstellung ein Ausführungsbeispiel für die Ausbildung der Getriebeeinheit als Umlaufgetriebe ohne Sonnenrad und mit Abtriebswelle mit Ritzel,
- Figur 4: schematisch in perspektivischer Darstellung die Verbindung der Planetenräder am Antriebsrad,
- Figur 5: schematisch in Explosionsdarstellung die Getriebeeinheit mit den Antriebsrad, den Hohlrädern, den Planetenräder und der Abtriebswelle,
- Figur 6: schematisch in Draufsicht auf die Antriebsseite (ohne Antriebsrad) die Abwälzung der Planetenräder an den Hohlrädern,
- Figur 7: schematisch in perspektivischer Ansicht die Getriebeeinheit ohne Antriebsrad und die Abwälzung der Planetenräder an den Hohlrädern und mit Abtriebswelle und Ritzel,
- Figur 8: schematisch in Explosionsdarstellung eine Ausführungsform für die Getriebeanordnung mit Antriebsrad und Abtriebswelle mit Ritzel,
- Figur 9: schematisch in Draufsicht auf die Abtriebsseite die Abwälzung der Planetenräder an den Hohlrädern,
- Figur 10: schematisch ein Schnittbild durch Figur 9,
- Figur 11: schematisch in Explosionsdarstellung eine Ausführungsform für einen Getriebemotor,
- Figur 12: schematisch in perspektivischer Darstellung den Getriebemotor im zusammengebauten Zustand, und
- Figur 13: schematisch einen Getriebemotor im zusammengebauten Zustand ohne Deckel.

Einander entsprechende Teile sind in allen Figuren mit den gleichen Bezugszeichen versehen.

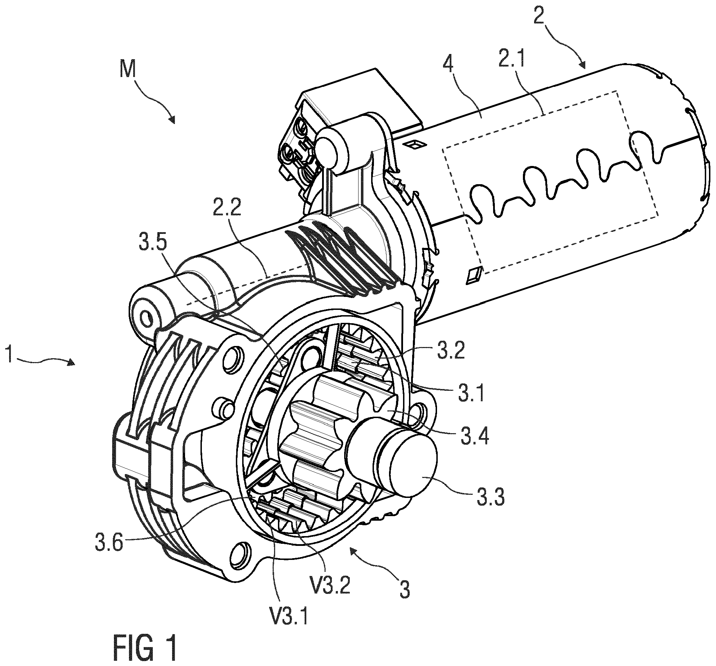

**Figur 1** zeigt schematisch ein Ausführungsbeispiel für eine Getriebeanordnung 1 mit einer Antriebseinheit 2 und einer mit dieser gekoppelten Getriebeeinheit 3. Die Getriebeanordnung 1 mit der Antriebseinheit 2 bilden einen Getriebemotor M.

Die Getriebeanordnung 1 ist beispielsweise Teil einer schematisch dargestellten Verstelleinheit V zum Beispiel für einen Sitz S. Beispielsweise ist die Getriebeanordnung 1 Teil einer Höhenverstelleinheit einer Kopfstütze oder einer Lehnenverstelleinheit einer Sitzlehne des Sitzes S, insbesondere eines Fahrzeugsitzes.

Die Getriebeanordnung 1 dient der Drehmomentübertragung von der Antriebseinheit 2 mittels der Getriebeeinheit 3 auf die Verstelleinheit V und treibt beispielsweise eine Spindel an.

Die Antriebseinheit 2 ist beispielsweise als eine Schneckenantriebseinheit ausgebildet und umfasst einen Motor 2.1 und eine Antriebswelle 2.2 mit einer nicht näher dargestellten Schnecke. Der Motor 2.1 und die Antriebswelle 2.2 mit Schnecke sind in Figur 1 durch ein Gehäuse 4 verdeckt.

Das Gehäuse 4 ist mehrteilig ausgebildet und haust zusätzlich zur Antriebseinheit 2 auch die Getriebeeinheit 3 ein. Der Motor 2.1 ist senkrecht zur Getriebeeinheit 3 angeordnet.

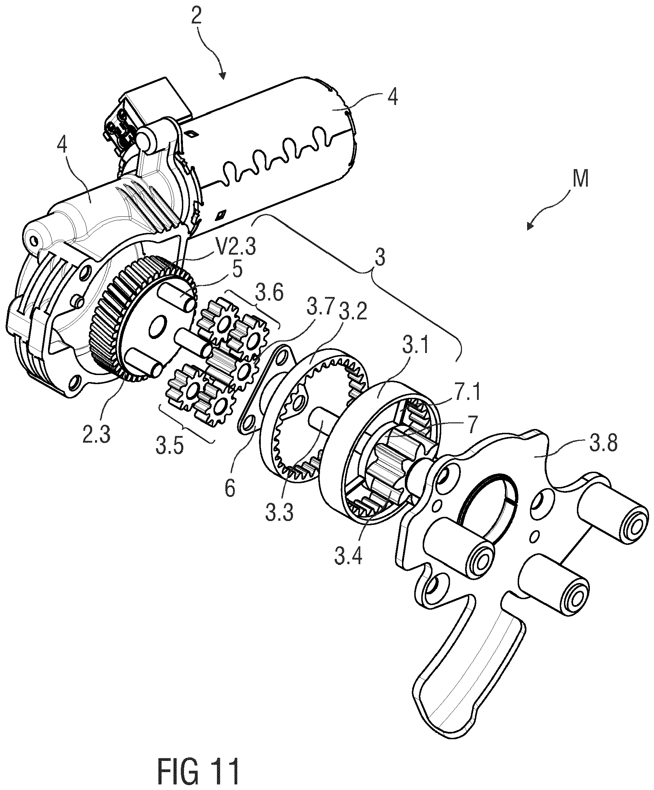

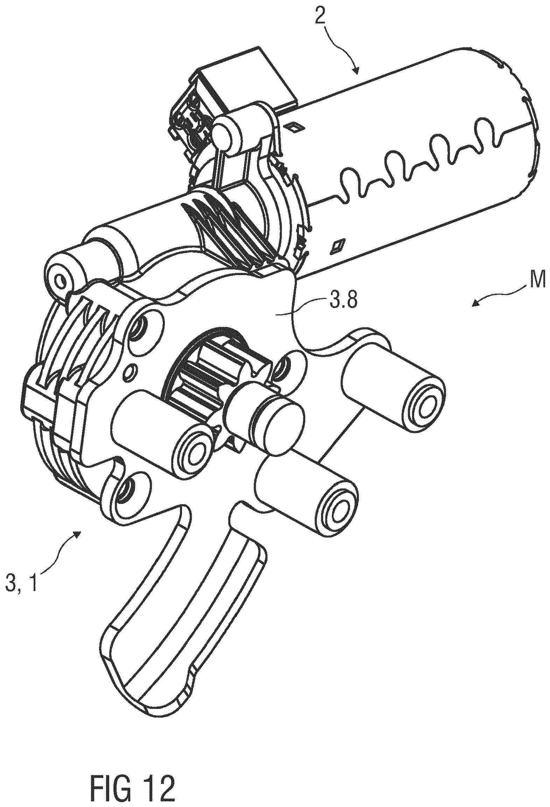

In **Figur 1** ist das Gehäuse 4 im Bereich der Getriebeeinheit 3 offen dargestellt. Das Gehäuse 4 umfasst zum Abdecken der Getriebeeinheit 3 einen Deckel 3.8, der in Figuren 11 und 12 dargestellt ist.

Die Getriebeeinheit 3 ist beispielsweise als eine Umlaufgetriebeeinheit ausgebildet und mit der Antriebseinheit 2 gekoppelt. Die Umlaufgetriebeeinheit wird im Weiteren als Umlaufgetriebeeinheit 3 bezeichnet.

Die Umlaufgetriebeeinheit 3 umfasst zwei Hohlräder 3.1 und 3.2. Die Zähneanzahl der Hohlräder 3.1 und 3.2 ist zur Drehmomentübertragung von der Antriebseinheit 2 auf die Umlaufgetriebeeinheit 3 voneinander verschieden. Beispielsweise beträgt die Zahndifferenz zwischen den Verzahnungen V3.1 und V3.2 eins oder mehr.

Eines der Hohlräder 3.1 ist feststehend ausgebildet. Beispielsweise ist das Hohlrad 3.1 mit dem Gehäuse 4 verbunden und drehfest ausgebildet. Das andere Hohlrad 3.2 ist als Abtriebselement beweglich, insbesondere drehbar, ausgebildet. Damit überträgt das Hohlrad 3.2 ein Drehmoment auf eine Abtriebswelle 3.3 und auf das auf diesem gelagerte Ritzel 3.4 einer der Verstelleinheiten V. Der Aufbau der Umlaufgetriebeeinheit 3 und die Art der Kopplung mit dem Motor 2.1 und der Verstelleinheit V bestimmen dabei, welche Welle oder welches Rad festgehalten wird und welche Welle/Rad als Antrieb bzw. Abtrieb dient.

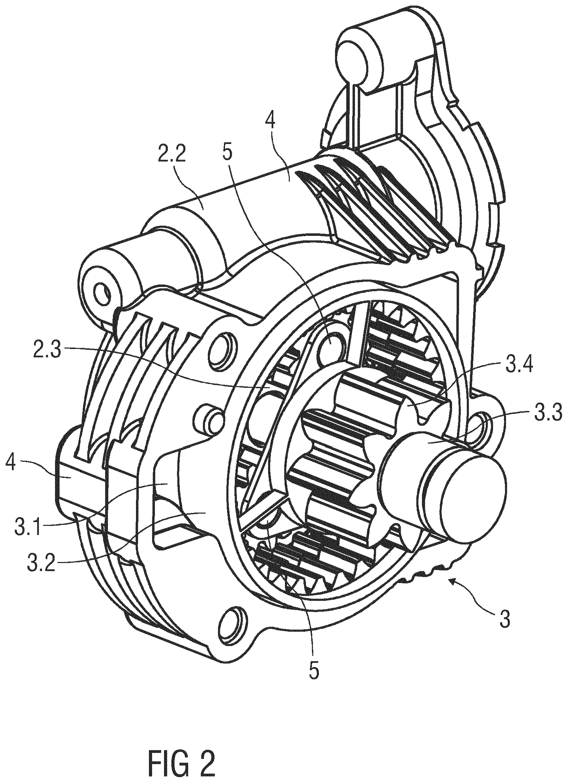

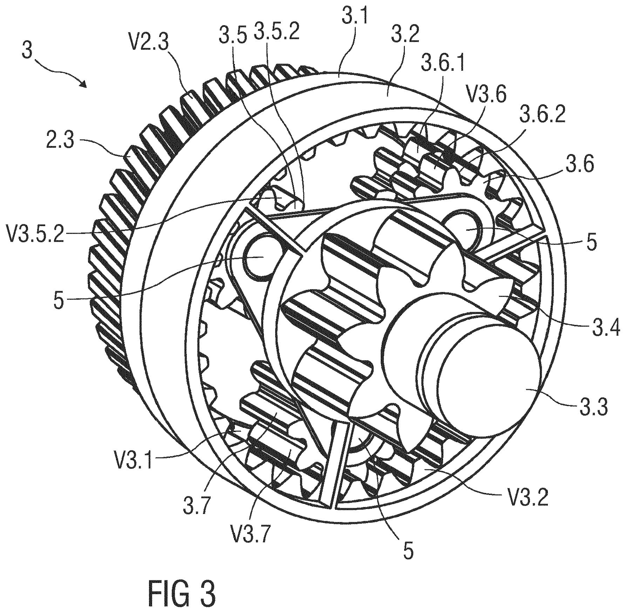

In den Hohlrädern 3.1 und 3.2 wälzen mindestens drei Planetenräder 3.5 bis 3.7 ab, wie das nachfolgend anhand der **Figuren 2** **und** **3** näher beschrieben wird.

Die Planetenräder 3.5 bis 3.7 sind jeweils mit einem Antriebsrad 2.3 der Antriebseinheit 2 gekoppelt. Insbesondere sind die Planetenräder 3.5 bis 3.7 jeweils mittels eines Bolzens 5 mit dem Antriebsrad 2.3 verbunden.

Das Antriebsrad 2.3 ist gekoppelt mit dem Motor 2.1. Der Getriebemotor M ist beispielsweise ein Schneckengetriebemotor. Das Antriebsrad 2.3 ist insbesondere als ein Schneckenrad einer Schneckenantriebseinheit ausgebildet.

Das Antriebsrad 2.3 weist eine Außenverzahnung V2.3 auf, in welche die nicht näher dargestellte Schnecke der Antriebswelle 2.2 der Antriebseinheit 2 eingreift und das Antriebsrad 2.3 antreibt.

Die Hohlräder 3.1 und 3.2 weisen eine Innenverzahnung V3.1, V3.2 auf.

Aufgrund der festen Verbindung der Planetenräder 3.5 bis 3.7 mit dem Antriebsrad 2.3 wälzen die Planetenräder 3.5 bis 3.7 in den Hohlrädern 3.1 und 3.2, insbesondere in deren Innenverzahnungen V3.1, 3.2, wie nachfolgend näher beschrieben, ab.

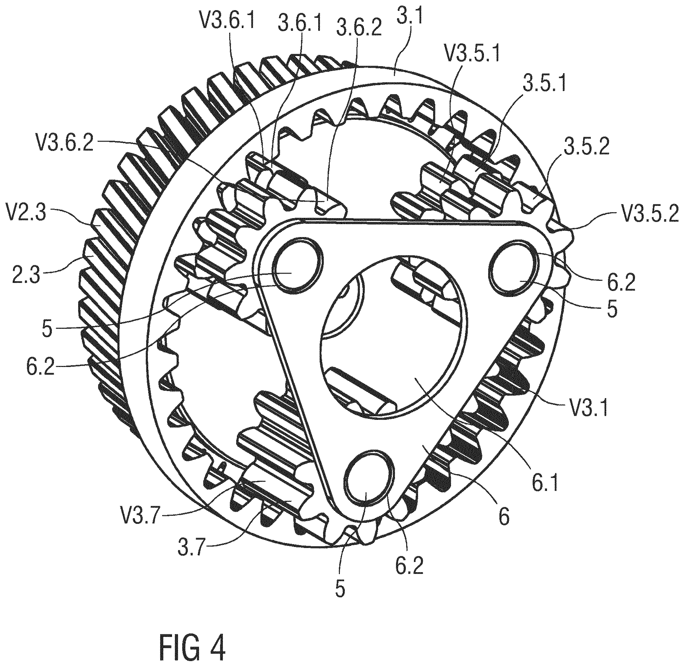

Die Planetenräder 3.5 bis 3.7 weisen eine Außenverzahnung V3.5 bis V3.7 auf. Zwei der Planetenräder 3.5 und 3.6 sind zweiteilig ausgebildet und dienen als Lagerung oder Lagerräder, die an den Innenverzahnungen V3.1, V3.2 der Hohlräder 3.1 und 3.2 abwälzen, um hinsichtlich der Wellenachse der Abtriebswelle 3.3 im Mittelpunkt der Umlaufgetriebeeinheit 3 zu bleiben. Dabei sind die die Lagerung bewirkenden Planetenräder 3.5 und 3.6 drehbar geteilt. Die Planetenräder 3.5 und 3.6 sind jeweils zweistückig ausgebildet. Erfindungsgemäß weist das Planetenrad 3.5 zwei zugehörige Lagerteilräder 3.5.1, 3.5.2 und das Planetenrad 3.6 zwei zugehörige Lagerteilräder 3.6.1, 3.6.2 auf, die jeweils drehbar geteilt sind, wie dies in Figur 4 näher gezeigt ist.

**Figur 4** zeigt in perspektivischer Darstellung das Umlaufgetriebe 3 mit dem Antriebsrad 2.3 und dem ersten Hohlrad 3.1 und den Planetenrädern 3.5 bis 3.7, aber ohne zweites Hohlrad 3.2 zur besseren Darstellung der Abwälzung der Lagerteilräder 3.5.1 bis 3.6.2 mit ihren Außenverzahnungen V3.5.1 bis V3.6.2 in den Innenverzahnungen V3.1 und V3.2 der beiden Hohlräder 3.1, 3.2.

Dabei wälzt eines der Lagerteilräder 3.5.1 oder 3.6.1 in dem einen Hohlrad 3.1, insbesondere an dessen Innenverzahnung V3.1, ab und das andere der Lagerteilräder 3.5.2 bzw. 3.6.2 am anderen Hohlrad 3.2, insbesondere an dessen Innenverzahnung V3.2, ab (nicht in Figur 4 gezeigt, aber in Figuren 1 bis 3 gezeigt).

Das dritte Planetenrad 3.7 ist einstückig ausgebildet. Das dritte Planetenrad 3.7 steht im Kraftfluss und erstreckt sich über beide Hohlräder 3.1 und 3.2 in Längsausdehnung. Dabei wird mit jeder vollständigen Umdrehung des dritten Planetenrades 3.7, infolge der Drehung des Antriebsrades 2.3, das drehbare Hohlrad 3.2 um einen Zahn weitergeschoben oder gedreht.

Hierzu weisen die Hohlräder 3.1 und 3.2 eine Innenverzahnung V3.1 bzw. V3.2 mit einer unterschiedlichen Zähneanzahl auf. Die Innenverzahnung V3.2 des drehbaren Hohlrads 3.2 weist insbesondere einen Zahn mehr auf als die Innenverzahnung V3.1 des feststehenden Hohlrads 3.1.

Die als Umlaufgetriebeeinheit 3 ausgebildete und beschriebene Getriebeeinheit ist als eine selbsthemmende Planetengetriebeeinheit ausgebildet und weist gegenüber herkömmlichen Planetengetrieben kein Sonnenrad oder Exzenter auf.

Aus diesem Grunde sind die Planetenräder 3.5 bis 3.7 fest jeweils mittels eines Bolzens 5 mit dem Antriebsrad 2.3 verbunden.

**Figur 4** zeigt schematisch in perspektivischer Darstellung die Verbindung der Planetenräder 3.5 bis 3.7 am Antriebsrad 2.3 mittels der Bolzen 5 ohne Gehäuse 4. Dabei sind nur das feststehende Hohlrad 3.1 und das Antriebsrad 2.3 gezeigt. Die Bolzen 5 stehen senkrecht von der Stirnoberfläche des Antriebsrads 2.3 in Richtung der Planetenräder 3.5 bis 3.7 ab. Zur drehfesten Befestigung dieser Planetenräder 3.5 bis 3.7 am Antriebsrad 2.3 kann darüber hinaus ein Halteelement 6, wie eine plattenförmige oder scheibenförmige Sicherung, am zum Antriebsrad 2.3 gegenüberliegenden Ende der Bolzen 5 auf diese aufgesteckt sein. Das Halteelement 6 weist eine zentrale Ausnehmung 6.1 zur Aufnahme der Abtriebswelle 3.3 auf.

Das Halteelement 6 weist symmetrisch verteilt drei Aufnahmen 6.2 für die Bolzen 5 auf. Das Halteelement 6 kann auch eine Form aufweisen, die von der dargestellten Dreiecksform abweicht. Das Halteelement 6 weist Außenabmessungen auf, die kleiner als die Innenabmessungen der Hohlräder 3.1 und 3.2 sind.

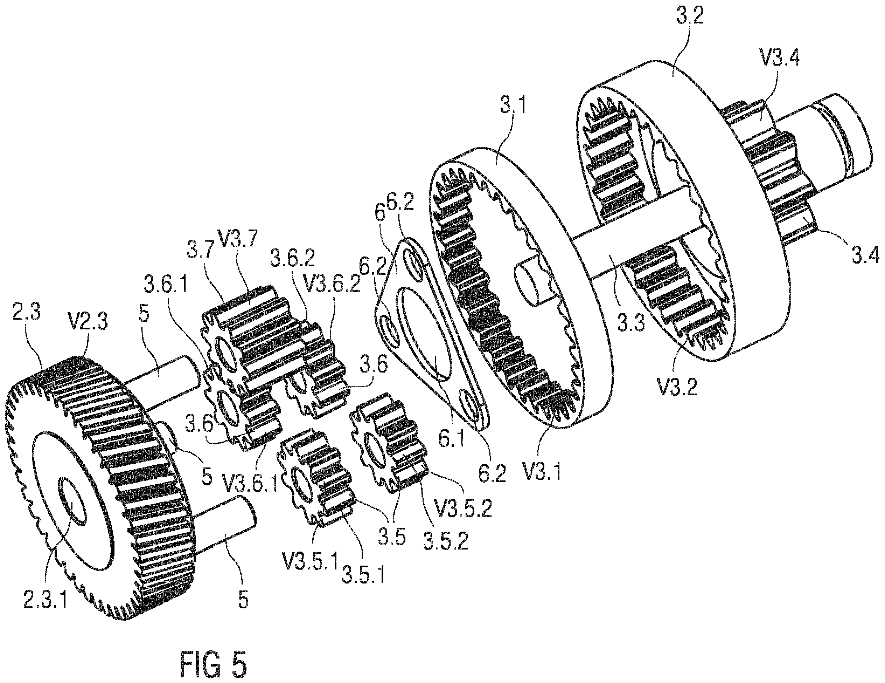

**Figur 5** zeigt schematisch in Explosionsdarstellung die Umlaufgetriebeeinheit 3 mit dem Antriebsrad 2.3 als Schneckenrad mit den vom Antriebsrad abstehenden Bolzen 5 zur Aufnahme der Planetenräder 3.5 bis 3.7, den Hohlrädern 3.1, 3.2, den Planetenräder 3.5 bis 3.7 und der Halterung 6 für diese und der Abtriebswelle 3.3 mit Ritzel 3.4.

Das Antriebsrad 2.3 weist ein Lager 2.3.1 für die Abtriebswelle 3.3 auf. Das Ritzel 3.4 weist eine Außenverzahnung V3.4 auf, in welche beispielsweise eine Spindel einer der Verstelleinheiten V eingreift und im Betrieb des Motors M angetrieben wird, um eine Verstellung zu bewirken.

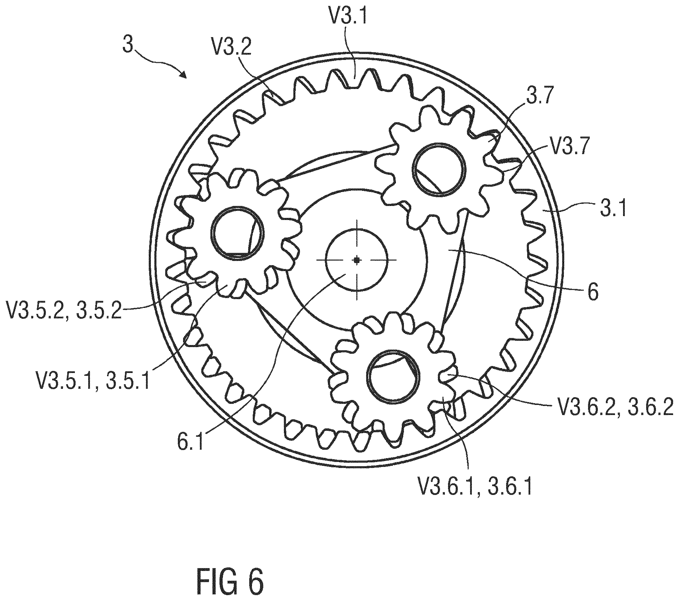

**Figur 6** zeigt schematisch eine Draufsicht auf die Antriebsseite (ohne Antriebsrad 2.3) der Getriebeeinheit 3 mit der Abwälzung der Planetenräder 3.5 bis 3.7 an den Hohlrädern 3.1, 3.2. Die Planetenräder 3.5 bis 3.7 weisen zur Aufnahme auf den in dieser Figur 6 nicht näher dargestellten, aber in Figur 5 gezeigten Bolzen 5 entsprechende Durchgangsöffnungen auf, in denen die Bolzen 5 aufgenommen werden. Die freien Enden der Bolzen 5 sind im zusammengebauten Zustand der Getriebeeinheit 3 in der Halterung 6 gehalten.

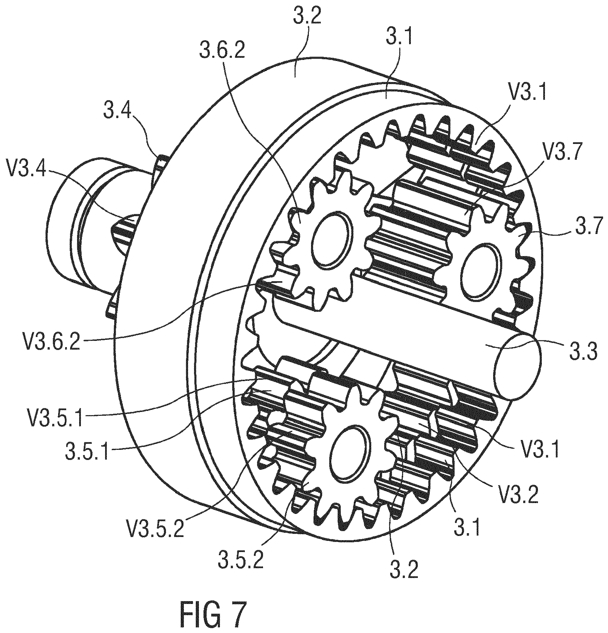

**Figur 7** zeigt schematisch in perspektivischer Ansicht die Umlaufgetriebeeinheit 3 ohne Antriebsrad und die Abwälzung der Planetenräder 3.5 bis 3.7 an den Hohlrädern 3.1, 3.2 und mit Abtriebswelle 3.3 und dem Ritzel 3.4.

Dabei wälzen die Abtriebselemente, insbesondere die Planetenräder 3.5 bis 3.7 in dem feststehenden Hohlrad 3.1 und dem angetriebenen und drehbaren abtriebsseitigen Hohlrad 3.2 ab.

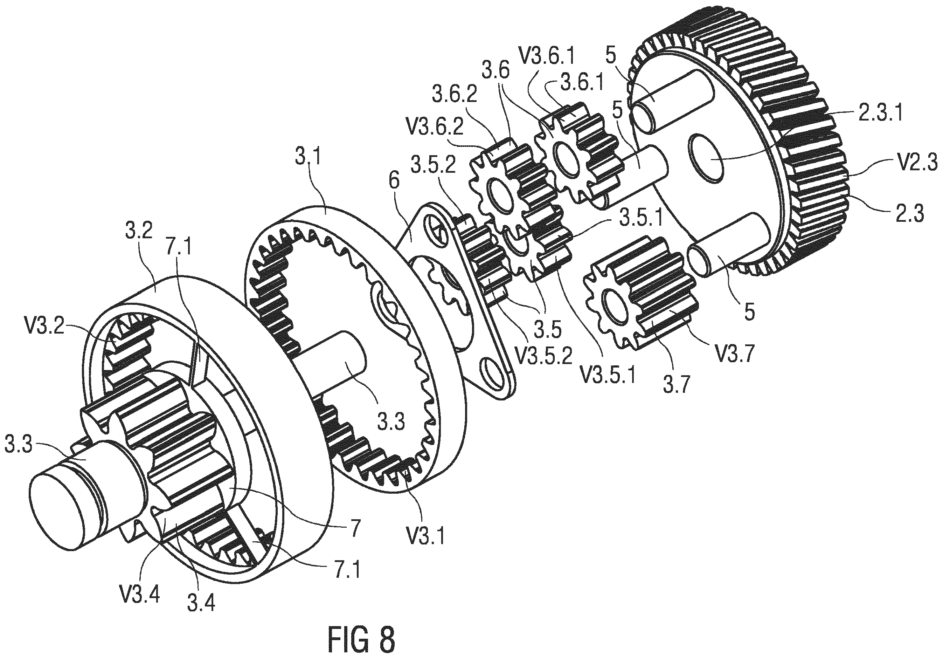

**Figur 8** zeigt eine Explosionsdarstellung der Umlaufgetriebeeinheit 3.

Zur Lagerung der Abtriebswelle 3.3 mit dem Ritzel 3.4 kann am gehäuseseitigen oder am abtriebsseitigen Hohlrad 3.2 (wie dargestellt) eine Halterung 7 vorgesehen sein. Die Halterung 7 ist scheiben- oder plattenförmig ausgebildet und mittels Stegen 7.1 am Gehäuse 4, insbesondere einem Deckel 3.8, insbesondere einem Gehäusedeckel oder, wie gezeigt, am Hohlrad 3.2 abgestützt.

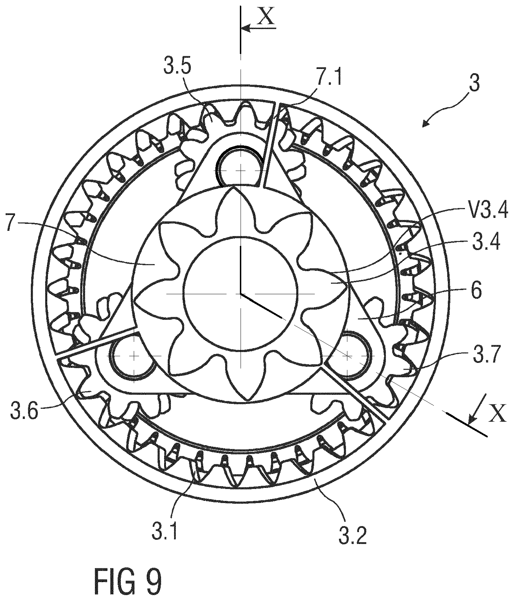

**Figur 9** zeigt in Draufsicht von der Abtriebsseite die Getriebeeinheit 3 mit dem Halteelement 6 für die Planetenräder 3.5 bis 3.7 und der Halterung 7 für die Abtriebswelle 3.3.

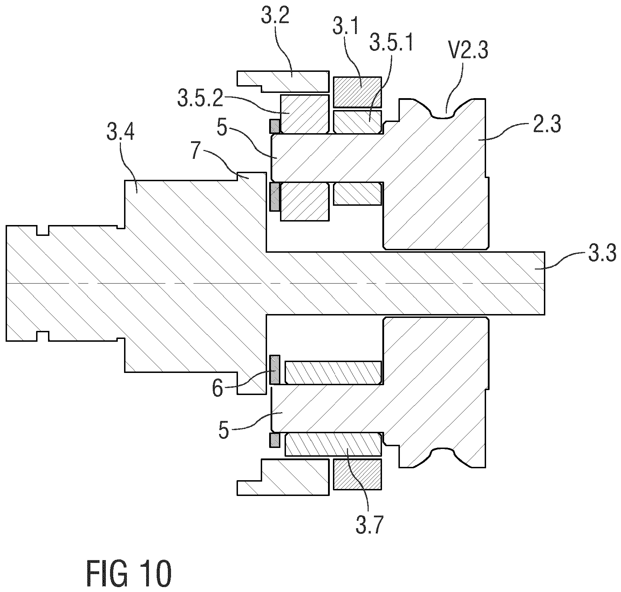

**Figur 10** zeigt die Getriebeeinheit 3 mit dem Halteelement 6 für die Bolzen 5 der Planetenräder 3.5 bis 3.7 und mit der Halterung 7 für die Abtriebswelle 3.3 in Schnittdarstellung.

**Figur 11** zeigt schematisch in Explosionsdarstellung den Getriebemotor M mit der Getriebeanordnung 1.

**Figur 12** zeigt schematisch in perspektivischer Ansicht den montierten Getriebemotor M im geschlossenen Gehäuse 4, das aus mehreren Gehäuseteilen bestehen kann.

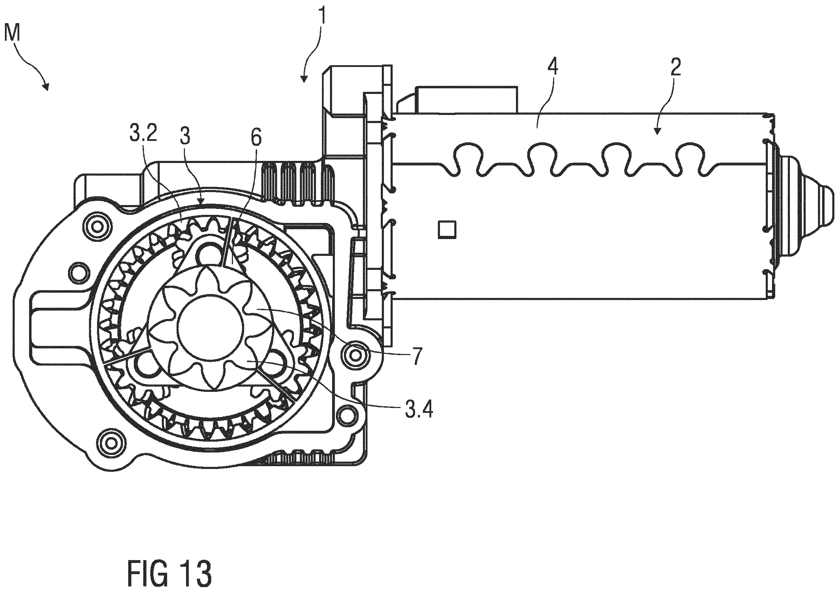

**Figur 13** zeigt den Getriebemotor M im zusammengebauten Zustand ohne Deckel 3.8.

Aufgrund der exzenterfreien Ausbildung der Umlaufgetriebeeinheit 3 ist der Wirkungsgrad erhöht und der Verschleiß verringert. Darüber hinaus ermöglicht die Getriebeanordnung 1 eine hohe Übersetzung aufgrund der Zähneanzahldifferenz von beispielsweise eins der Hohlräder 3.1, 3.2 zueinander.

### Bezugszeichenliste

- 1: Getriebeanordnung
- 2: Antriebseinheit
- 2.1: Motor
- 2.2: Antriebswelle
- 2.3: Antriebsrad
- 2.3.1: Lager
- 3: Getriebeeinheit
- 3.1: Hohlrad
- 3.2: Hohlrad
- 3.3: Abtriebswelle
- 3.4: Ritzel
- 3.5 bis 3.7: Planetenräder
- 3.5.1, 3.5.2, 3.6.1, 3.6.2: Lagerteilräder
- 3.8: Deckel
- 4: Gehäuse
- 5: Bolzen
- 6: Halteelement
- 6.1: Ausnehmung
- 6.2: Aufnahmen
- 7: Halterung
- 7.1: Stege

- M: Getriebemotor
- V: Verstelleinheit
- V2.3, V3.4, V3.5.1 bis V3.6.2, 3.7: Außenverzahnung
- V3.1, V3.2: Innenverzahnung
- S: Sitz

## Patentansprüche

1. Getriebeanordnung (1) zur Drehmomentübertragung, umfassend
- eine Umlaufgetriebeeinheit (3) mit zwei Hohlrädern (3.1, 3.2), die jeweils eine Verzahnung (V3.1, V3.2) aufweisen, deren Zähneanzahl verschieden ist,
wobei in den zwei Hohlrädern (3.1, 3.2) mindestens drei Planetenräder (3.5 bis 3.7) abwälzen, wobei eines der Hohlräder (3.1) feststehend ist und das andere Hohlrad (3.2) beweglich ausgebildet ist,
**dadurch gekennzeichnet, dass** zwei der Planetenräder (3.5, 3.6) zweistückig, als voneinander getrennte und unabhängig in den Hohlrädern (3.1, 3.2) wälzende Lagerteilräder (3.5.1 bis 3.6.2) ausgebildet sind und ein drittes Planetenrad (3.7) einstückig ausgebildet ist und als kraftübertragendes Rad in beiden Hohlrädern (3.1, 3.2) abwälzt.

2. Getriebeanordnung (1) nach Anspruch 1, wobei die Lagerteilräder (3.5.1 bis 3.6.2) eines Lagerrades Verzahnungen (V3.5.1 bis V3.6.2) aufweisen, deren Zähneanzahl gleich ist.

3. Getriebeanordnung (1) nach einem der vorhergehenden Ansprüche, wobei antriebsseitig an einem der beiden Hohlräder (3.1, 3.2) ein Antriebsrad (2.3) vorgesehen ist, das stirnseitig in Richtung der Hohlräder (3.1, 3.2) drei Bolzen (5) zur Aufnahme je eines der Planetenräder (3.5 bis 3.7) aufweist.

4. Getriebeanordnung (1) nach Anspruch 3, wobei am freien Ende der Bolzen (5), die die Planetenräder (3.5 bis 3.7) tragen, ein Halteelement (6) angeordnet ist, das die Bolzen (5) trägt.

5. Getriebeanordnung (1) nach einem der vorhergehenden Ansprüche, wobei abtriebsseitig eine Halterung (7) angeordnet ist, die eine Abtriebswelle (3.3) trägt, die mit dem Antriebsrad (2.3) gekoppelt ist.

6. Getriebeanordnung (1) nach Anspruch 5, wobei die Halterung (7) mittels Stegen (7.1) im abtriebsseitigen Hohlrad (3.1) gehalten ist.

7. Getriebeanordnung (1) nach Anspruch 5 oder 6, wobei abtriebsseitig an der Halterung (7) ein Ritzel (3.4) angeordnet ist.

8. Getriebemotor (M) mit einer Getriebeanordnung (1) nach einem der vorhergehenden Ansprüche und einer mit dieser gekoppelten Antriebseinheit (2).

## Claims

1. Gearing assembly (1) for torque transmission, comprising
- an epicyclic gearing unit (3) having two ring gears (3.1, 3.2) which each have a toothing (V3.1, V3.2), the number of teeth thereof being different, wherein at least three planetary gears (3.5 to 3.7) roll in the two ring gears (3.1, 3.2), wherein one of the ring gears (3.1) is stationary and the other ring gear (3.2) is designed to be movable,
**characterized in that** two of the planetary gears (3.5, 3.6) have a two-piece design in the form of partial bearing gears (3.5.1 to 3.6.2) which are separate from one another and which roll independently in the ring gears (3.1, 3.2), and a third planetary gear (3.7) has a one-piece design and rolls in the two ring gears (3.1, 3.2) in the form of a force-transmitting gear.

2. Gearing assembly (1) according to Claim 1, wherein the partial bearing gears (3.5.1 to 3.6.2) of a bearing gear have toothings (V3.5.1 to V3.6.2), the number of teeth thereof being equal.

3. Gearing assembly (1) according to one of the preceding claims, wherein a drive gear (2.3) is provided on the drive side on one of the two ring gears (3.1, 3.2) and has three bolts (5) at the end face in the direction of the ring gears (3.1, 3.2) to receive one each of the planetary gears (3.5 to 3.7) .

4. Gearing assembly (1) according to Claim 3, wherein a holding element (6), which carries the bolts (5), is arranged at the free end of the bolts (5) carrying the planetary gears (3.5 to 3.7).

5. Gearing assembly (1) according to one of the preceding claims, wherein a mount (7) is arranged on the output side, said mount carrying an output shaft (3.3) which is coupled to the drive gear (2.3).

6. Gearing assembly (1) according to Claim 5, wherein the mount (7) is held in the output-side ring gear (3.1) by means of webs (7.1).

7. Gearing assembly (1) according to Claim 5 or 6, wherein a pinion (3.4) is arranged on the mount (7) on the output side.

8. Gear motor (M) having a gearing assembly (1) according to one of the preceding claims and a drive unit (2) coupled thereto.

## Revendications

1. Agencement d'engrenages (1) pour le transfert de couple, comprenant :
- une unité d'engrenage planétaire (3) avec deux couronnes (3.1, 3.2), qui présentent chacune une denture (V3.1, V3.2), dont le nombre de dents est différent,
au moins trois pignons satellites (3.5 à 3.7) roulant dans les deux couronnes (3.1, 3.2), l'une des couronnes (3.1) étant fixe et l'autre couronne (3.2) étant configurée sous forme mobile,
**caractérisé en ce que**
deux des pignons satellites (3.5, 3.6) sont configurés en deux pièces, sous forme de roues partielles de palier (3.5.1 à 3.6.2) séparées l'une de l'autre et roulant indépendamment dans les couronnes (3.1, 3.2), et un troisième pignon satellite (3.7) est configuré en une seule pièce et roule en tant que roue de transfert de force dans les deux couronnes (3.1, 3.2).

2. Agencement d'engrenages (1) selon la revendication 1, dans lequel les roues partielles de palier (3.5.1 à 3.6.2) d'une roue de palier présentent des dentures (V3.5.1 à V3.6.2), dont le nombre de dents est identique.

3. Agencement d'engrenages (1) selon l'une quelconque des revendications précédentes, dans lequel une roue motrice (2.3) est prévue, côté entraînement, sur l'une des deux couronnes (3.1, 3.2), qui présente, côté frontal, en direction des couronnes (3.1, 3.2), trois boulons (5) pour recevoir chacun l'un des pignons satellites (3.5 à 3.7).

4. Agencement d'engrenages (1) selon la revendication 3, dans lequel un élément de retenue (6), qui porte les boulons (5), est agencé à l'extrémité libre des boulons (5) qui portent les pignons satellites (3.5 à 3.7) .

5. Agencement d'engrenages (1) selon l'une quelconque des revendications précédentes, dans lequel un support (7) est agencé du côté de la sortie, qui porte un arbre de sortie (3.3) qui est couplé à la roue motrice (2.3).

6. Agencement d'engrenages (1) selon la revendication 5, dans lequel le support (7) est retenu dans la couronne côté sortie (3.1) au moyen de nervures (7.1).

7. Agencement d'engrenages (1) selon la revendication 5 ou 6, dans lequel un pignon (3.4) est agencé sur le support (7) du côté de la sortie.

8. Moteur à engrenages (M) comprenant un agencement d'engrenages (1) selon l'une quelconque des revendications précédentes et une unité d'entraînement (2) couplée à celui-ci.
